# EUROPÄISCHE PATENTSCHRIFT

(11) **EP 4 110 972 B1**
(45) Veröffentlichungstag und Bekanntmachung des Hinweises auf die Patenterteilung: **03.01.2024**
(21) Anmeldenummer: 21707720.5
(22) Anmeldetag: 01.03.2021
(51) Int. Cl.: C23C 22/50, C23C 16/00, C23C 22/62, C23C 22/82, C23C 2/06, C23C 8/00, B21D 22/02, C23C 2/24, C23C 8/02, C23C 8/10, C23C 2/28, C23C 2/02, C23C 2/26

(54) **VERFAHREN ZUM HERSTELLEN GEHÄRTETER STAHLBAUTEILE MIT EINER KONDITIONIERTEN ZINKLEGIERUNGSKORROSIONSSCHUTZSCHICHT**
METHOD FOR PRODUCING HARDENED STEEL COMPONENTS WITH A CONDITIONED ZINC ALLOY CORROSION PROTECTION LAYER
PROCÉDÉ DE FABRICATION DE COMPOSANTS EN ACIER DURCI DOTÉ D'UNE COUCHE DE PROTECTION CONTRE LA CORROSION EN ALLIAGE DE ZINC CONDITIONNÉE

(30) Priorität: 28.02.2020 EP 20160199
(43) Veröffentlichungstag der Anmeldung: 04.01.2023
(73) Patentinhaber: voestalpine Stahl GmbH, 4020 Linz (AT)
(72) Erfinder: FLEISCHANDERL, Martin, 4261 Rainbach i.M. (AT); SCHACHINGER, Ernst, 4020 Linz (AT)
(74) Vertreter: HGF
(86) Internationale Anmeldenummer: PCT/EP2021/054965
(87) Internationale Veröffentlichungsnummer: WO 2021/170862

(56) Entgegenhaltungen:
- WO-A1-2014/012703
- DE-B4-102010 037 077
- US-A1- 2003 034 095

## Beschreibung

Die Erfindung betrifft ein Verfahren zum Herstellen gehärteter Stahlbauteile mit einer konditionierten Zinklegierungskorrosionsschutzschicht.

Es ist seit langem bekannt, metallische Bleche, insbesondere metallische Bänder, welche unter gewöhnlichen Anwendungsbedingungen korrodieren könnten, mit Schutzschichten zu versehen.

Im Allgemeinen können Korrosionsschutzschichten auf Metallbändern organische Beschichtungen sein, also zum Beispiel Lacke, wobei diese Lacke durchaus auch korrosionsverhindernde Mittel enthalten können.

Darüber hinaus ist es bekannt, Metallbänder durch Metallbeschichtungen zu schützen. Derartige Metallbeschichtungen können aus einem elektrochemisch edleren Metall oder aus einem elektrochemisch unedleren Metall bestehen.

Bei einer Beschichtung aus einem elektrochemisch edleren Metall oder einem Metall, welches sich selbst passiviert, wie zum Beispiel Aluminium, spricht man von einer Barriereschutzschicht, wobei beispielsweise beim Aufbringen von Aluminium auf Stahl das Stahlmaterial dann eine Korrosion erleidet, wenn diese Barriereschutzschicht stellenweise nicht mehr vorhanden ist, beispielsweise durch mechanische Beschädigung. Eine übliche Barriereschutzschicht von Stahl ist die bereits genannte Aluminiumschicht, welche üblicherweise durch Schmelztauchbeschichten aufgebracht wird.

Wird ein elektrochemisch unedleres Metall als Schutzschicht aufgebracht, spricht man von einer kathodischen Korrosionsbeschichtung, weil bei einer mechanischen Verletzung der Korrosionsschutzbeschichtung bis auf das Stahlmaterial das elektrochemisch unedlere Metall zunächst korrodiert wird, bevor das Stahlmaterial selbst der Korrosion ausgesetzt ist.

Die am häufigsten verwendete kathodische Schutzbeschichtung auf Stahl ist eine Zinkbeschichtung bzw. eine Legierung auf Basis von Zink.

Es sind verschiedene Verzinkungsverfahren bekannt. Ein gebräuchliches Verzinkungsverfahren ist die so genannte Feuerverzinkung (auch als Schmelztauchverzinkung bekannt). Dabei wird Stahl kontinuierlich (z.B. Band oder Draht) oder stückweise (z.B. Bauteile oder Platinen) bei Temperaturen von etwa 450 °C bis 600 °C in eine Schmelze aus flüssigem Zink getaucht (der Schmelzpunkt von Zink liegt bei 419,5 °C). Die Zinkschmelze weist konventionell einen Zinkgehalt von mindestens 98,0 Gew-% gemäß DIN EN ISO 1461 auf. Auf der Stahloberfläche bildet sich eine widerstandsfähige Legierungsschicht aus Eisen und Zink und darüber liegt eine fest haftende reine Zinkschicht, deren Zusammensetzung der Zinkschmelze entspricht. Bei einem kontinuierlich verzinkten Band weist die Zinkschicht eine Dicke von 5 µm bis 40 µm auf. Bei einem stückweise verzinkten Bauteil kann die Zinkschicht Dicken von 50 µm bis 150 µm aufweisen.

Bei einer elektrolytischen Verzinkung (galvanischen Verzinkung) werden Stahlbänder oder Stahlplatten nicht in einer Zinkschmelze, sondern in einen Zinkelektrolyten eingetaucht. Dabei wird der zu verzinkende Stahl als Kathode in die Lösung eingebracht und als Anode wird eine Elektrode aus möglichst reinem Zink oder ein Elektrolyt mit hoher Menge an gelöstem Zink verwendet. Durch die Elektrolytlösung wird Strom geleitet. Dabei wird das in ionischer Form vorliegende Zink (Oxidationsstufe +II) zu metallischem Zink reduziert und an der Stahloberfläche abgeschieden. Im Vergleich zum Feuerverzinken können durch elektrolytische Verzinkung dünnere Zinkschichten aufgetragen werden. Die Zinkschichtdicke ist dabei proportional zur Stärke und Zeitdauer des Stromflusses, wobei - abhängig von der Werkstück- und Anodengeometrie - eine Schichtdickenverteilung über das gesamte Werkstück entsteht.

Zur Sicherstellung des Haftvermögens auf der Zinkschicht ist eine sorgfältige Oberflächenvorbehandlung erforderlich. Dabei kann es sich beispielsweise um Entfetten, alkalische Reinigung, Spülen und/oder Dekapieren handeln. Nach der Verzinkung können eine oder mehrere Nachbehandlungen durchgeführt werden, wie z.B. Phosphatieren, Ölen, Aufbringen von organischen Beschichtungen (z.B. kataphoretische Tauchlackierung - KTL).

Hierbei werden üblicherweise nicht nur reine Metallschichten abgeschieden. Es gibt auch eine Vielzahl von bekannten Legierungen, die abgeschieden werden, neben reinen Aluminiumbeschichtungen gibt es auch Beschichtungen, die Aluminium und Zink enthalten und Beschichtungen, die neben einem überwiegenden Zinkanteil geringe Mengen an Aluminium enthalten, wobei auch weitere Elemente enthalten sein können, wie zum Beispiel Zink, Nickel, Chrom und Magnesium und andere Elemente, sowie Mischungen hieraus. Wenn im Zuge der Anmeldung von Zinkkorrosionsschutzschichten oder verzinkten Stahlband die Rede ist, sind Legierungen auf der Basis von Zink mit umfasst.

Es ist darüber hinaus seit längerem bekannt, insbesondere zur Senkung des Gewichts von Fahrzeugkarosserien zumindest Teile der Fahrzeugkarosserien hochfest auszubilden, um eine hinreichende Festigkeit im Crash-Fall zu gewährleisten. Die Gewichtsersparnis entsteht dadurch, dass hochfeste Stahlsorten mit vergleichbar geringen Wandstärken verwendet werden können und somit ein geringes Gewicht besitzen.

Auch bei der Verwendung von hochfesten Stahlsorten gibt es unterschiedliche Ansätze und die unterschiedlichsten Stahlsorten, welche verwendbar sind.

Besonders häufig werden Stahlsorten verwendet, die durch eine Abschreckhärtung hochfest werden. Abschreckhärtung bedeutet, dass eine Kühlrate über der kritischen Kühlrate gewählt wird. Diese liegt bei etwa 15° bis 25° Kelvin pro Sekunde kann aber je nach Legierungszusammensetzung auch niedriger sein. Eine übliche Stahlsorte, welche durch Abschreckhärtung härtbar ist, sind die sogenannten Bor-Mangan-Stähle, wie zum Beispiel der am häufigsten eingesetzte 22MnB5, aber auch Varianten dieses Stahles, wie zum Beispiel 20MnB8, 30MnB8. Es können auch nicht härtbare Stähle wie z.B. ein mikrolegierter Stahl im direkten bzw. indirekten Verfahren warmumgeformt werden.

Derartige Stahlgüten lassen sich im ungehärteten Zustand gut verformen und zuschneiden.

Um derartige Stahlgüten insbesondere im Karosseriebau in die gewünschte Form zu bringen und zu härten, gibt es im Wesentlichen zwei unterschiedliche Verfahrenswege.

Der erste und etwas ältere Verfahrensweg ist das sogenannte Presshärten. Beim Presshärten wird aus einem Stahlblechband aus einer abschreckhärtbaren Stahllegierung, zum Beispiel einem 22MnB5 oder einem ähnlichen Mangan-Bor-Stahl, eine ebene Platine ausgeschnitten. Diese ebene Platine wird anschließend so hoch erhitzt, dass das Stahlgefüge in der Erscheinungsform des Gammaeisens bzw. Austenits vorliegt. Um dieses Gefüge zu erreichen, muss somit die sogenannte Austenitisierungstemperatur Ac₃ überschritten werden, zumindest, wenn eine vollständige Austenitisierung erwünscht wird.

Diese Temperatur kann je nach Stahl zwischen 820°C und 900°C liegen, wobei derartige Stahlplatinen beispielsweise auf etwa 900°C bis 930°C erhitzt und auf dieser Temperatur bis zur vollständigen Gefügeänderung gehalten werden.

Anschließend wird eine derartige Stahlplatine im heißen Zustand in einer Presse überführt, in der mittels eines Oberwerkzeuges und eines Unterwerkzeuges, die jeweils korrespondierend ausgeformt sind, die heiße Stahlplatine mit einem einzigen Pressenhub in die gewünschte Form gebracht wird. Durch den Kontakt des heißen Stahlmaterials mit dem vergleichsweise kühlen, insbesondere gekühlten Pressenwerkzeugen, also Umformwerkzeugen, wird dem Stahl Energie sehr schnell entzogen. Insbesondere muss die Wärme so schnell entzogen werden, dass die sogenannte kritische Härtegeschwindigkeit überschritten wird, welche üblicherweise zwischen 20° und 25° Kelvin pro Sekunde liegt.

Wird derart schnell abgekühlt, wandelt sich das Gefüge des Austenits nicht wieder in ein ferritisches Ausgangsgefüge um, sondern es wird ein martensitisches Gefüge erreicht. Durch den Umstand, dass Austenit erheblich mehr Kohlenstoff in seinem Gitter lösen kann als Martensit, kommt es durch Kohlenstoffausscheidungen zur Gitterverzerrung, die zu der großen Härte des Endproduktes führt. Durch die schnelle Abkühlung wird sozusagen der martensitische Zustand stabilisiert. Hierdurch sind Härten bzw. Zugfestigkeiten Rₘ von mehr als 1500 MPa realisierbar. Durch geeignete Maßnahmen, auf die nicht nähere eingegangen werden soll, wie das vollständige oder teilbereichsweise Wiedererwärmen, können auch Härteprofile eingestellt werden.

Ein weiterer, etwas jüngerer Weg gehärtete Stahlbauteile insbesondere für den Karosseriebau zu erzeugen, ist das von der Anmelderin entwickelte Formhärten. Beim Formhärten wird aus einem Stahlband eine ebene Stahlplatine ausgeschnitten und diese ebene Stahlplatine anschließend im kalten Zustand umgeformt. Diese Umformung erfolgt insbesondere nicht mit einem einzigen Pressenhub, sondern wie in herkömmlichen Pressenstraßen üblich, beispielsweise in einem fünfstufigen Prozess. Dieser Prozess lässt erheblich komplexere Formen zu, so dass am Ende ein komplex geformtes Bauteil, wie zum Beispiel die B-Säule oder ein Längsträger eines Kraftfahrzeuges erzeugt werden kann.

Um ein solches fertig geformte Bauteil anschließend zu härten, wird dieses Bauteil in einem Ofen ebenfalls austenitisiert und im austenitisierten Zustand in ein Formwerkzeug überführt, wobei das Formwerkzeug die Kontur des endgültigen Bauteils besitzt. Vorzugsweise ist das vorgeformte Bauteil vor dem Erhitzen so ausgeformt, dass nach dem Erhitzen und somit auch einer erfolgten Wärmedehnung dieses Bauteil schon den Endabmessungen des gehärteten Bauteils weitestgehend entspricht. Dieser austenitisierte Rohling wird im austenitisierten Zustand in das Formwerkzeug eingelegt und das Formwerkzeug geschlossen. Vorzugsweise wird das Bauteil hierbei allseitig vom Formwerkzeug berührt und klemmend gehalten und durch den Kontakt mit dem Formwerkzeug die Wärme ebenfalls so entzogen, dass ein martensitisches Gefüge erzeugt wird.

Im geklemmten Zustand kann eine Schrumpfung nicht stattfinden, so dass das gehärtete Endbauteil mit den entsprechenden Endabmessungen nach dem Härten und Abkühlen aus dem Formwerkzeug entnommen werden kann.

Da Kraftfahrzeugkarosserien üblicherweise eine Korrosionsschutzbeschichtung aufweisen, wobei die dem die Karosserie ausbildenden Metallmaterial, insbesondere Stahl, am nächsten liegende Korrosionsschutzschicht eine metallische Beschichtung ist, wurden in der Vergangenheit auch Korrosionsschutzbeschichtungen für gehärtete Bauteile angestrebt und entwickelt.

Korrosionsschutzbeschichtungen für zu härtende Bauteile sind jedoch anderen Anforderungen ausgesetzt als Korrosionsschutzbeschichtungen von Bauteilen, die nicht gehärtet werden. Die beim Härten entstehenden hohen Temperaturen müssen von den Korrosionsschutzbeschichtungen verkraftet werden. Da seit langem bekannt ist, dass feueraluminierte Beschichtungen auch hohen Temperaturen widerstehen, wurden zunächst Presshärtestähle entwickelt, welche eine Schutzschicht aus Aluminium besitzen. Derartige Beschichtungen sind in der Lage, nicht nur die hohen Temperaturen, sondern auch die Umformung im heißen Zustand zu überstehen. Von Nachteil ist jedoch, dass üblicherweise in Kraftfahrzeugen keine Feueraluminierungen auf herkömmlichen Stahlgüten verwendet werden, sondern Feuerverzinkungen und es grundsätzlich problematisch ist, unterschiedliche Korrosionsschutzsysteme einzusetzen, insbesondere wenn die Gefahr der Kontaktkorrosion besteht.

Daher wurden von der Anmelderin Verfahren entwickelt, welche es erlauben, Zinkbeschichtungen zur Verfügung zu stellen, welche ebenfalls derart hohen Temperaturen widerstehen.

Grundsätzlich sind Zinkbeschichtungen, was die Umformung betrifft, erheblich unkomplizierter als Aluminiumbeschichtungen, da Aluminiumbeschichtungen bei herkömmlichen Umformtemperaturen dazu neigen, abzuplatzen oder zu reißen. Dies geschieht bei Zink nicht.

Jedoch wurde zunächst erwartet, dass Zinkbeschichtungen den hohen Temperaturen nicht widerstehen können. Spezielle Zinkbeschichtungen, die jedoch einen gewissen Anteil sauerstoffaffiner Elemente besitzen, sind in der Lage, auch bei hohen Temperaturen verarbeitet zu werden, denn die sauerstoffaffinen Elemente diffundieren schnell an die luftseitige Oberfläche und oxidieren dort und bilden eine Oxidschicht auf der Zinkbeschichtung. Mittlerweile haben sich derartige Zinkbeschichtungen insbesondere für das Formhärten durchgesetzt. Auch beim Presshärten können derartige Zinkbeschichtungen mit großem Erfolg eingesetzt werden.

Um eine optimale Lackhaftung, eine geringe Lackunterwanderung im Zuge von Korrosionsprozessen und eine optimale Schweißeignung zu gewährleisten, ist es bekannt, die fertig umgeformten und gehärteten Bauteile so zu reinigen, dass die schützende Oxidschicht eingeebnet oder abgetragen wird.

Aus der DE 10 2010 037 077 B4 ist ein Verfahren zum Konditionieren der Oberfläche gehärteter korrosionsgeschützter Bauteile aus Stahlblech bekannt, wobei das Stahlblech ein mit einer metallischen Beschichtung überzogenen Stahlblech ist und zum Härten aufgeheizt und abgeschreckt gehärtet wird. Nach dem Härten werden die durch das Aufheizen auf der Korrosionsschutzbeschichtung vorhandenen Oxide entfernt, wobei das Bauteil zur Konditionierung der Oberfläche des metallischen Überzuges, also der Korrosionsschutzschicht, einem Gleitschleifen unterworfen wird, wobei die Korrosionsschutzbeschichtung eine Beschichtung auf der Basis von Zink ist und die Oberflächenkonditionierung so durchgeführt wird, dass auf der Korrosionsschutzschicht aufliegende oder anhaftende Oxide abgeschliffen werden und insbesondere eine Mikroporosität freigelegt wird.

Aus der DE 10 2007 022 174 B3 ist ein Verfahren zum Erzeugen und Entfernen einer temporären Schutzschicht für eine kathodische Beschichtung bekannt, wobei ein Stahlblech aus einer härtbaren Stahllegierung mit einer Zinkbeschichtung im Schmelztauchverfahren versehen wird, wobei der Aluminiumgehalt im Zinkbad so eingestellt wird, dass sich während der Schmelzhärtung eine oberflächliche Oxidhaut aus Aluminiumoxid bildet, wobei diese dünne Haut nach dem Härten durch das Bestrahlen des Blechbauteils mit Trockeneispartikeln abgesprengt wird.

Eine weitere Alternative zur Entfernung bzw. Konditionierung der Oxidschicht ist das sogenannte Schleuderradstrahlen bei welchem abrasive Partikel auf das Band gestrahlt werden wobei die Oxidschicht durch die Partikel abgesprengt bzw. eingeebnet wird. Ein Beispiel hierfür ist die EP 1 630 244 B1 oder auch EP 2 233 508 B1.

Derartige Schutzschichten treten üblicherweise nur bei Zinkbeschichtungen auf, während Aluminiumbeschichtungen häufig keiner Reinigung oder nur einer weniger aufwändigen Reinigung unterzogen werden müssen.

Aus der WO 2018/126471 A1 ist eine Sol-Gel-Vorkonditionierung der Schicht zur Verringerung der Oxidschichtbildung und Erhöhung der Schweißbarkeit bekannt. Hierdurch soll eine Oxidationsschutzbeschichtung für presshärtende Stahlwerkstoffe geschaffen werden, auf der Basis von silan- und titanhaltigen Bindern und oxidischen Pigmenten, die offenbar im Sol-Gel-Prozess aufgebracht werden. Insbesondere werden hier Lösungsmittel, wie Methanol eingesetzt, welche auf Stahlfertigungsanlagen nicht einsetzbar sind. Die Beschichtung soll nach dem Presshärten von selbst herunterfallen, wobei jedoch Versuche mit Titan und Silizium basierten Beschichtungen 2015/16 stattfanden und weder mit dicken noch mit dünnem Nassfilm erfolgreich waren. Weder fällt die Beschichtung von selbst herunter, noch ist die Schweißeignung industriell tauglich.

Aus der EP 2 536 857 B1 ist eine keramikbasierte Beschichtung mit einer Dicke ≤ 25 µm bekannt, welche im Wesentlichen aus SiOz, Al₂O₂ und MgO bestehen soll, wobei gegebenenfalls metallische Fasern aus Zinn enthalten sein sollen. Es ist allerdings aus der Literatur bekannt, dass eine hohe Konzentration an SiOz zu einer mangelnden Schweißeignung führen kann.

Aufgabe der Erfindung ist es, ein Verfahren zum Herstellen gehärteter Stahlbauteile zu schaffen bei dem eine vorhandene Zinklegierungskorrosionsschutzschicht so konditioniert ist, dass eine strahlende Reinigung (Konditionierung der Bauteiloberfläche mittels Strahlgut, Gleitschleifen oder ähnlichem) nach dem Härten entfallen kann.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Es ist eine weitere Aufgabe, ein verzinktes Stahlband zu schaffen, welches so beschaffen ist, dass die Abreinigung der Oxidschicht entbehrlich ist.

Die Aufgabe wird mit einem legierungsverzinkten Stahlband mit den Merkmalen des Anspruchs 14 gelöst.

Vorteilhafte Weiterbildungen sind in den hiervon abhängigen Unteransprüchen gekennzeichnet.

Erfindungsgemäß wurde erkannt, dass unter bestimmten Umständen auf eine Abreinigung der Oberfläche eines Metallbandes, welches verzinkt ist und einer Temperaturerhöhung zum Zwecke einer Gefügeänderung unterzogen wurde verzichtet werden kann. Insbesondere die mechanische Abreinigung eines verzinkten Stahlblechs und eines daraus erzeugten gehärteten Bauteils können entfallen.

Eine reinigende Nachbehandlung ist zwar ein beherrschbarer und gut eingeführter Prozess, gleichwohl wird ein höherer Arbeitsaufwand erzeugt. Zudem besteht ein Risiko bezüglich zusätzlicher Oberflächenfehler, wobei auch insgesamt höhere Kosten verursacht werden. Bei sehr dünnen Bauteilen hat sich herausgestellt, dass unter bestimmten Umständen die Maßgenauigkeit der Bauteile eingeschränkt werden kann.

Falls verschaltete Prozessfolgen vorliegen, welche vorsehen, dass diese Reinigungsschritte innerhalb einer gesamten Fertigung inline angeordnet sind, muss eventuell eine Anpassung der Taktzeit vorgesehen werden.

Erfindungsgemäß hat sich herausgestellt, dass zur Einstellung der Phosphatierbarkeit, Lackierbarkeit und Schweißbarkeit eine Oberflächenbehandlung der verzinkten Oberfläche vor dem Warmumformprozess erfolgreich ist. Erfindungsgemäß kann das Oxidwachstum während des Härtungsprozesses so gestaltet werden, dass sich eine nachfolgende mechanische Oberflächenkonditionierung, wie beispielsweise Schleuderabstrahlen, Gleitschleifen oder Trockeneistrahlen erübrigt.

Erfindungsgemäß hat sich herausgestellt, dass in überraschender Weise gewisse wässrige Salzlösungen des Zinns, wie zum Beispiel Salzlösungen die bevorzugt Stannate aber auch Oxalate, Zirkonate und Titanate die Oxidhaut offenbar so modifizieren, dass eine wie auch immer geartete Abreinigung entbehrlich ist.

Insbesondere und überraschend hat sich gezeigt, dass Stannate bzw. metallisches Zinn hierbei eine besondere Wirksamkeit entwickeln.

Dies ist umso überraschender, weil zinklegierungsbeschichtete Bleche im geglühten Zustand üblicherweise unzureichend phosphatierbar sein können.

Unter dem Begriff Stannate werden die Salze der Zinnsäuren (II) und -(IV) zusammengefasst.

### Stannate (IV) sind insbesondere:

Ammoniumhexachlorostannat H₈N₂Cl₆Sn,
Bariumstannat BaSnO₃
Wismutstannat BiSn₂O₇
Bleistannatdihydrat PbSnO₃*2H₂O
Cadmiumstannat CdSn₂O₄
Calciumstannat CaSnO₃
Cobalt(II)-stannatdihydrat CoSnO₃*2H₂O
Kaliumstannattrihydrat K₂SnO₃*3H₂O
Kupfer(II)-stannat CuSnO₃
Lithiumhexafluorstannat Li₂[SnF₆]
Natriumstannat Na₂SnO₃ (Anhydrid)
Trihydrat und Hexahydroxid
Strontiumstannat SrSnO₃
Zinkhexahydroxostannat Zn[Sn(OH)₆]
Zinkstannat ZnSnO₃.

### Stannate (II) sind zum Beispiel:

Natriumstannat NazSnOz
Calciumstannat(II) CaSnOz.

Erfindungsgemäß wird insbesondere eine wässrige alkalische Lösung bsp. mittels Rollcoater oder durch eine Spritz-Quetschbehandlung oder eine andere Behandlung auf eine verzinkte Oberfläche vor dem Glüh- und Härteprozess aufgebracht. Hierbei wird mit sehr dünnen Schichtdicken gearbeitet, welche wässrig 1-5 µm betragen und getrocknet 50-250 nm dick sind. Die Zinnbelegung bei der Verwendung von Stannaten liegt bei 30-90 mg Zinn pro m² in Form von K₂[SnO₃].

Erfindungsgemäß hat sich herausgestellt, dass bei einer üblichen Glühdauer von Blechen, die einer Härtung unterzogen werden sollen, der Oberflächenwiderstand sehr gering ist und auch bei einem zyklischen Korrosionstest nach VDA 233-102 Klimawechseltest nur eine sehr geringe Lackunterwanderungsneigung festgestellt werden konnte. Optisch sind erheblich weniger Oxide feststellbar, was sich durch eine silbrige Färbung des geglühten Bleches offenbart. Üblicherweise stellt eine solche Silbrigkeit ein Problem dar, da sie eine mangelnde Durchreaktion bzw. eine beständige Al₂O₃ Schicht anzeigt. Bei Untersuchungen hat sich gezeigt, dass die Zink-Eisen-Kristalle der Zinkschicht durchreagiert sind. Zudem konnte eine gute Ausbildung der Phosphatkristalle bei der Phospatierung festgestellt werden. Dies war in dieser Form nicht zu erwarten, da fachmännisches Wissen vorgibt, dass Zinn Phosphatierung negativ beeinflusst.

Ohne dass dies erklärbar wäre, wird trotz der Silbrigkeit, welche üblicherweise einer Verringerung der Emissivität erzeug, tendenziell sogar etwas höhere Aufheizraten als ohne Zinn bzw. Stannatbehandlung der Zinkoberfläche erreicht. Woran dies liegen könnte, ist noch nicht restlos aufgeklärt.

Insgesamt kann derzeit noch nicht gesagt werden, wie die Zinn-Lösung im Detail wirkt, die Wirkung ist jedoch überraschend und absolut eindeutig.

Die Erfindung betrifft somit ein Verfahren zum Herstellen gehärteter Stahlbauteile, wobei aus einem legierungsverzinkten Band aus einer härtbaren Stahllegierung Platinen ausgeschnitten werden und anschließend die Platinen auf eine Temperatur aufgeheizt werden, die eine Gefügeänderung hin zum Austenit bewirkt bevorzugt auf eine Temperatur über dem jeweiligen Ac3-Punkt, wobei die austenitisierten Platinen anschließen einem Presshärtewerkzeug zugeführt werden, in dem die Platinen mittels eines Ober- und Unterwerkzeuges in einem Hub oder mehreren Hüben warmumgeformt werden, wobei die umgeformte Platine an den insbesondere gekühlten Werkzeugen mit einer Geschwindigkeit über der kritischen Abkühlrate gekühlt wird, so dass es zu einer martensitischen Härtung kommt, wobei nach dem Verzinken, bevorzugt Feuerverzinken des Stahlbandes und vor der Temperaturerhöhung zum Zwecke der Austenitisierung Zinn auf die Oberfläche des Bandes oder der Platine aufgebracht wird.

In einer Ausführungsform wird das Zinn in ionarer Form oder in metallischer Form aufgebracht wird, wobei das Zinn in ionarer Form aus einer wässrigen Salzlösung und in metallischer Form mit einem CVD- oder PVD-Verfahren aufgebracht.

In einer Ausführungsform wird das Zinn aus einer alkalischen oder sauren Lösung aufgebracht.

In einer Ausführungsform wird eine wässrige Stannatlösung aufgebracht, die basisch oder sauer eingestellt ist.

In einer Ausführungsform ist das Zinn in der Lösung mit Zitronensäure komplexiert.

In einer Ausführungsform wird wässrige Lösung mit einer Schichtdicke von 1 - 5 µm aufgebracht, insbesondere 1 - 3 µm aufgebracht, wobei die Schichtdicke getrocknet 50 - 250 nm, bevorzugt 50 -150 nm insbesondere 75 - 125 nm, insbesondere 80 - 100 nm beträgt.

In einer Ausführungsform beträgt die Zinnbelegung 30 - 90 mg Zinn/m², insbesondere 40 - 80 mg Zinn/m², und insbesondere 50 - 60 mg Zinn/m².

In einer Ausführungsform wird eine wässrige Lösung mit einer Lösungskonzentration von 150 - 250 g/l K₂SnO₃*3H₂O verwendet.

In einer Ausführungsform wird ein wässriger Lösungsansatz mit 150 - 250 g/l K₂SnO₃*3H₂O und 15 - 25 g/l KOH verwendet.

In einer Ausführungsform wird eine Lösung verwendet, die einen pH-Wert von 12,5 - 13,5 besitzt.

In einer Ausführungsform wird eine Lösung verwendet, die einen pH-Wert von 4 - 5,5 besitzt und in der das Zinn mit Zitronensäure komplexiert ist.

In einer Ausführungsform ist zur Komplexierung des Zinns Zitronensäure in einer Menge von 35 - 40 g/l enthalten, wobei der pH-Wert 4 - 5,5 beträgt.

In einer Ausführungsform beträgt die Lösungskonzentration 200 g/l K₂SnO₃*3H₂O mit 20 g/l KOH.

In einem weiteren Aspekt betrifft die Erfindung ein verzinktes Stahlband, beschichtet mit 40 - 80 mg Zinn/m².

In einer Ausführungsform ist das Zinn metallisch oder in Ionenform abgeschieden.

In einer Ausführungsform ist das Zinn aus einer Stannatlösung oder mittels PVD- oder CVD-Verfahren abgeschieden.

In einem weiteres Aspekt der Erfindung betrifft diese die Verwendung eines vorgenannten Stahlbandes, hergestellt mit einem vorgenannten Verfahren, in einem Verfahren, in dem ein Stahlblech zum Zwecke der Austenitisierung erhitzt und anschließend umgeformt und mit einer Abkühlrate über der kritischen Abkühlrate gehärtet insbesondere abschreckgehärtet wird.

Die Erfindung wird anhand einer Zeichnung beispielhaft erläutert. Es zeigen dabei:
- Figur 1: der Herstellungsweg beim Formhärteprozess bzw. phs-ultraform Prozess nach dem Stand der Technik;
- Figur 2: den Herstellungsweg beim Warmumformprozess bzw. Presshärten bzw. phs-directform Prozess nach dem Stand der Technik;
- Figur 3: den Herstellungsweg einer Variante des mehrstufigen Warmumformprozess bzw. mehrstufigen Presshärten bzw. phs-multiform Prozess nach dem Stand der Technik
- Figur 4: ein Anlagenschema einer Feuerverzinkungsanlage nach dem Stand der Tech-nik
- Figur 5: ein Anlagenschema einer elektrolytischen Verzinkungsanlage nach dem Stand der Technik
- Figur 6: eine elektronenmikroskopische Aufnahme der Oberfläche nach dem Glühen ohne Konditionierung (Stand der Technik);
- Figur 7: eine elektronenmikroskopische Aufnahme der erfindungsgemäß konditionierten Oberfläche nach dem Glühen;
- Figur 8: den Vergleich von zwei Stahlblechen nach der Glühung links ohne Konditionierung und rechts entsprechend erfindungsgemäß konditioniert;
- Figur 9: ein Schliff des erfindungsgemäß konditionierten Stahlblechs mit der Elementverteilung an vier verschiedenen Messpunkten;
- Figur 10: die Oberfläche eines verzinkten Stahlblechs nach dem Glühen bei einer Glühzeit von 45 Sekunden und 200 Sekunden;
- Figur 11: die Oberfläche des Stahlblechs nach dem Glühen mit einer erfindungsgemäßen Oberflächenkonditionierung nach 45 Sekunden und 200 Sekunden;
- Figur 12: der elektrische Widerstand der Blechoberfläche bei erfindungsgemäß behandelten Oberflächen;
- Figur 13: die Lackunterwanderung bei erfindungsgemäß konditionierten Oberflächen nach sechs Wochen gemäß VDA-Test.

Erfindungsgemäß wird die Oberfläche eines verzinkten Metallblechs, insbesondere Stahlblechs, welches in einem Presshärteprozess in einer Stufe umgeformt und gehärtet wird mit Zinn bzw. Stannaten konditioniert, wobei nachfolgend auf die Konditionierung mit Stannaten eingegangen wird.

Die einsetzbaren Stannate wurden bereits aufgeführt, insbesondere geeignet ist eine Kaliumstannatlösung, wobei grundsätzlich die Aufbringung von Stannat bzw. von Zinn in ionarer Form auf die Oberfläche ein Weg ist.

Hierbei kann sowohl mit basischen als auch mit sauren Lösungen gearbeitet werden und insbesondere mit Lösungen gearbeitet werden, in denen das Zinn komplexiert wird.

Insbesondere wird eine wässrige Schichtdicke von 1 - 5µm angestrebt, bei einer getrockneten Schichtdicke von 50 - 250 nm bevorzugt 50 - 150 nm und einer Zinnbelegung von 30 - 90 mg Zinn/m² in Form von K₂[SnO₃].

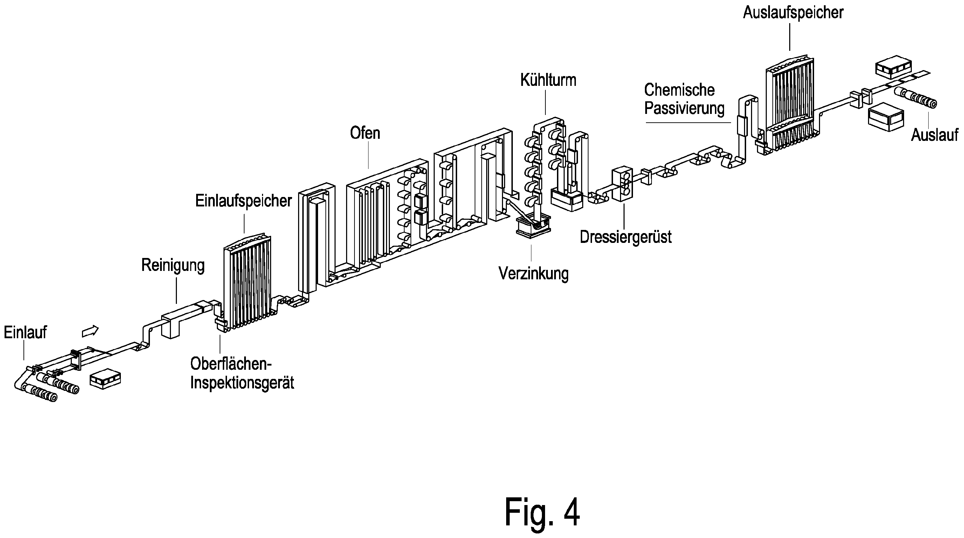

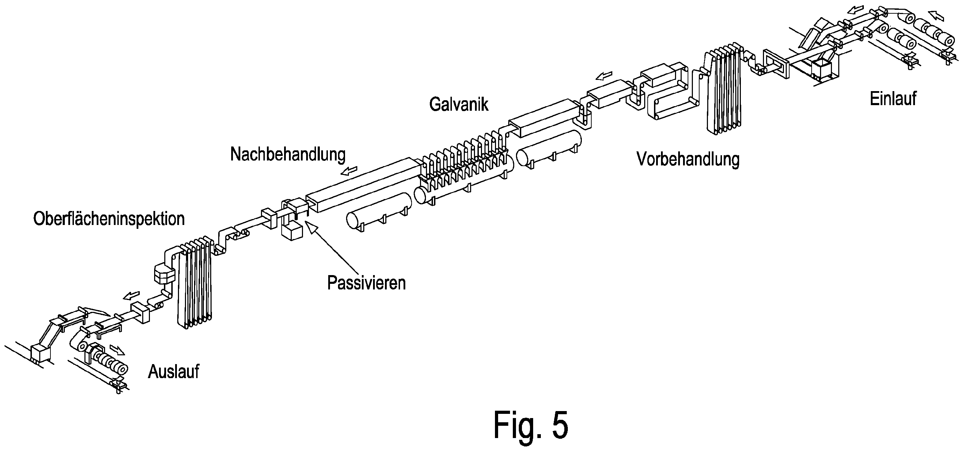

Die Figuren 4 und 5 zeigen eine Feuerverzinkungsanlage bzw. eine elektrolytische Verzinkungsanlage. Hierbei kann die Aufbringung des Stannat vorzugsweise im Bereich der chemischen Passivierung (in Figur 4) bzw. der Station "Passivieren" (in Figur 5) vorgenommen werden.

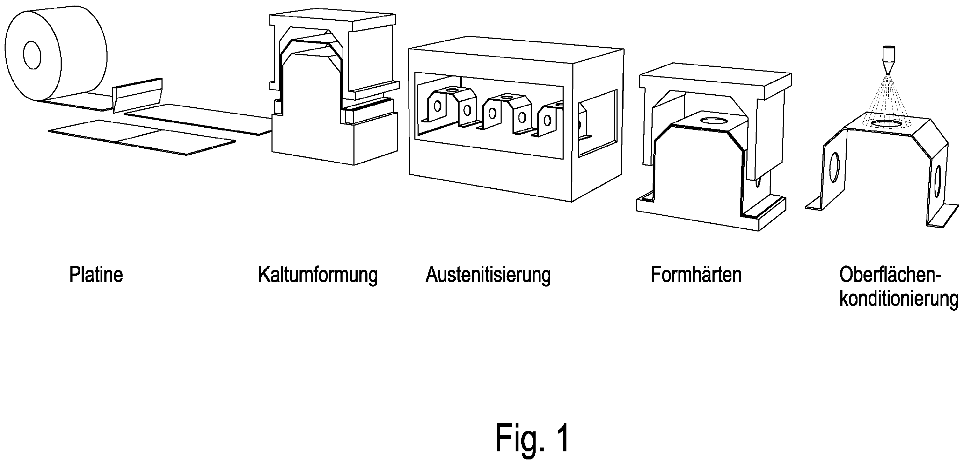

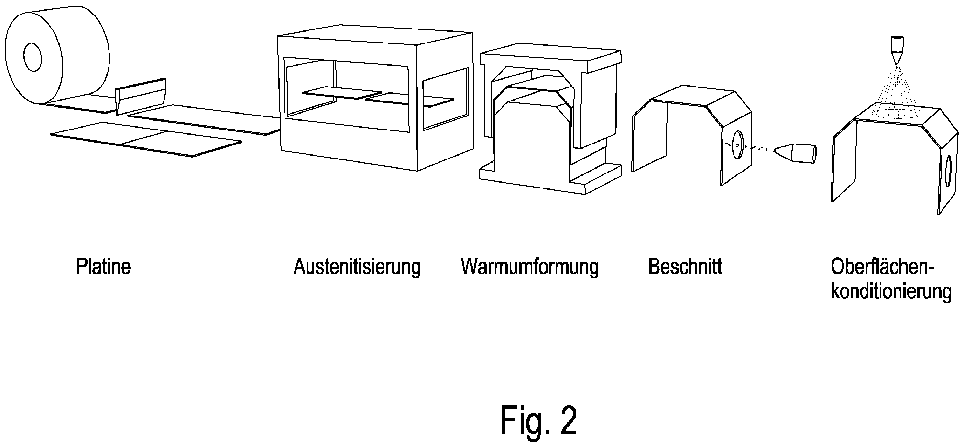

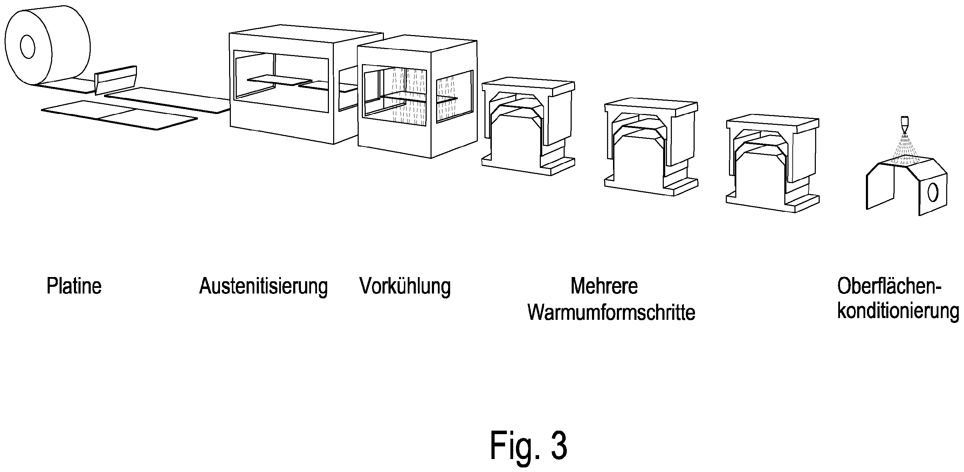

In den Figuren 1 bis 3 sieht man herkömmliche Verfahren, bei denen ein verzinktes Stahlblech, bei dem die Zinkschicht ein sauerstoffaffines Element enthält, beispielsweise Aluminium, entweder vor dem Umformen austenitisiert wird oder nach dem Umformen austenitisiert wird und jeweils in einer Presse abschreckgehärtet wird. Dies entspricht dem phs-ultraform Verfahren (Figur 1) wobei nach einer Kaltumformung dann das umgeformte Teil über Ac3 austenitisiert und nachfolgend formgehärtet wird. In Figur 2 wird das phs-directform Verfahren dargestellt, in welchem zuerst die Platine austenitisiert wird und im warmen Zustand umgeformt wird und danach der Beschnitt erfolgt. Figur 3 zeigt eine Variante hierfür, den sogenannten phs-multiform Prozess, in welchem nach der Austenitisierung und einer optionalen Vorkühlung auf insbesondere 450°C bis 650°C ein mehrstufiger Prozess mit mehreren Umformschritten bzw. Schneid- und Stanzvorgängen welche im Begriff "Warmumformschritte subsummiert sind, erfolgen. Nach dem Härten besitzen die derart wärmebehandelten Bleche an der Oberfläche eine Schicht insbesondere aus Aluminiumoxid und Zinkoxid, welche vorzugsweise abgereinigt wird.

Erfindungsgemäß konnte herausgefunden werden, dass die Konditionierung der Oberfläche mit sehr geringen Zinnmengen offensichtlich derart stark in die Bildung der Oxidschicht eingreift, dass diese in dieser Form nicht entsteht bzw. soweit konditioniert wird, dass sie nicht abgereinigt werden muss.

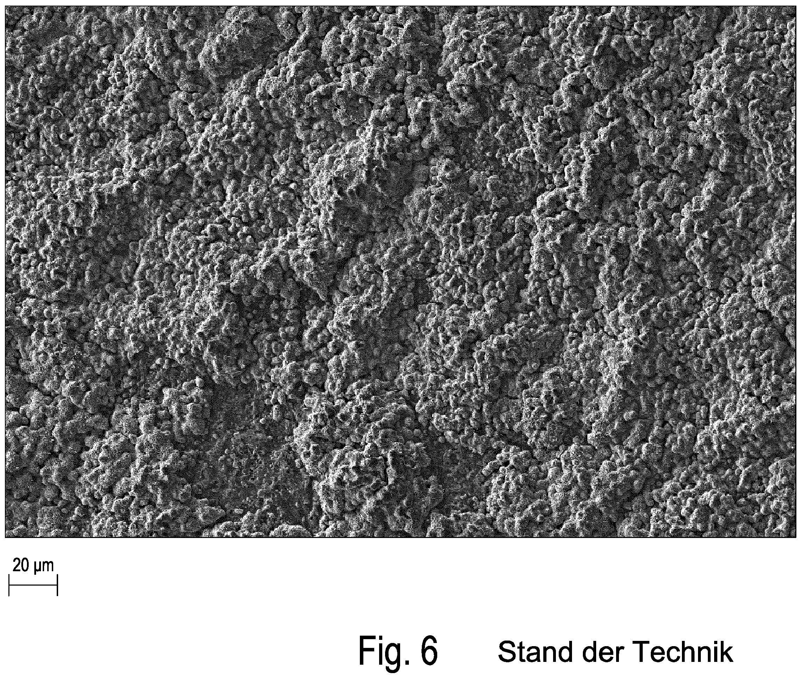

Eine herkömmlich erzeugte gehärtete Stahlplatine zeigt an der Oberfläche ein grünlich-beiges Aussehen, welches durch verstärkte Ausbildung von Zink- und Manganoxiden verursacht wird. Dies ist in Figur 6 dargestellt.

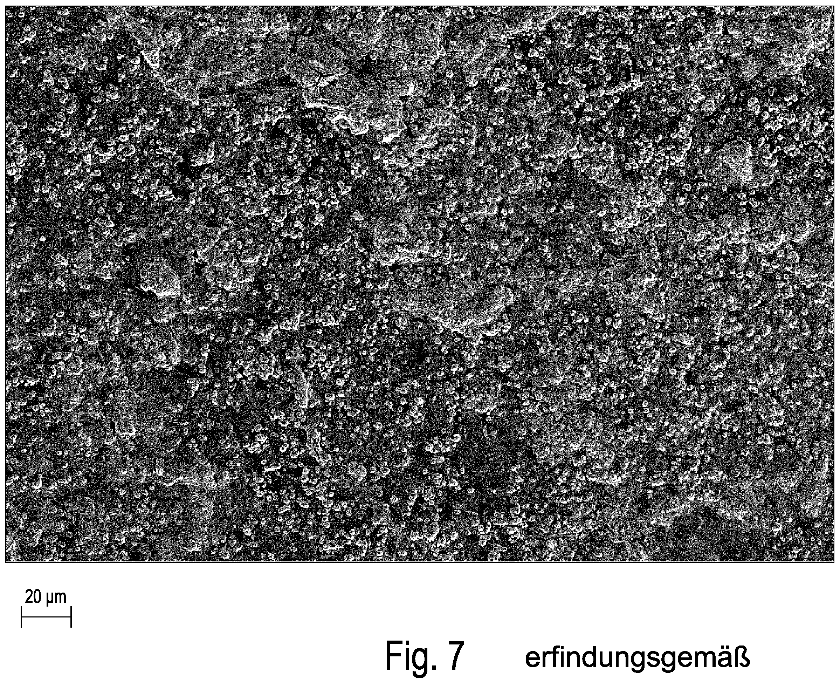

Bei einer Konditionierung mit einer Stannatlösung zeigt das Blech eine silbrige Oberfläche (Figur 7) bestehend hauptsächlich aus Zinkoxiden bzw. Zinnoxiden.

Während bei herkömmlichen Verfahren silbrige Oberflächen auf eine fehlende Durchreaktion der Zinkschicht mit dem darunterliegenden Stahl hindeuten, ist dies bei der Erfindung nicht der Fall. Messungen haben gezeigt, dass die Zinkschicht in gleicher Weise durchreagiert ist. Es sind jedoch wenige Aluminiumoxide an der Oberfläche ausgebildet, wobei der Oberflächenwiderstand als Maß für die Punktschweißeignung und die Lackunterwanderung sehr gering sind.

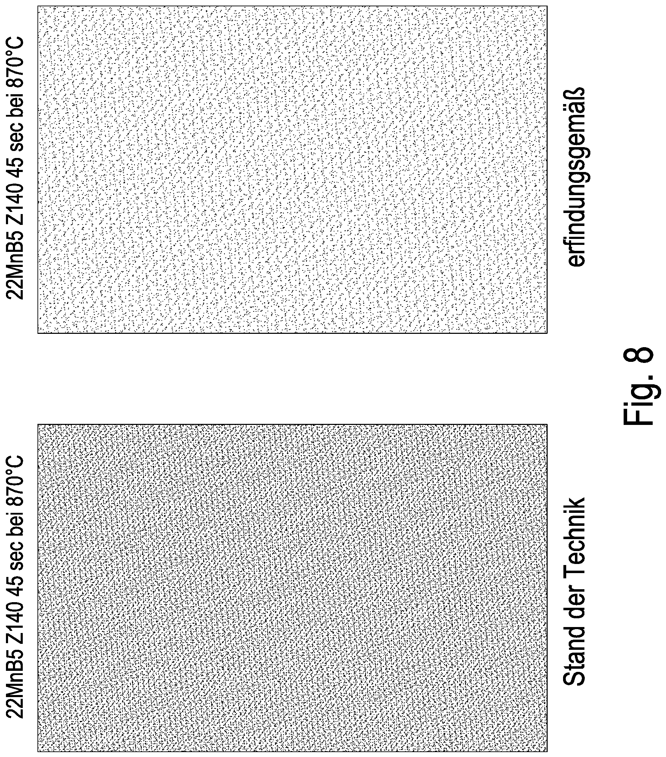

Figur 8 zeigt nochmals einen Vergleich eines gehärteten verzinkten Stahlblechs nach dem Stand der Technik mit einem erfindungsgemäß behandelten. Beide Bleche jeweils der Güte 22MnB5 mit einer Zinkschichtauflage von 140 g/m² (beidseitig) wurden für 45 Sekunden bei einer Temperatur über Ac3 geglüht. Die Erscheinung des Blechs nach dem Stand der Technik ist wesentlich dunkler.

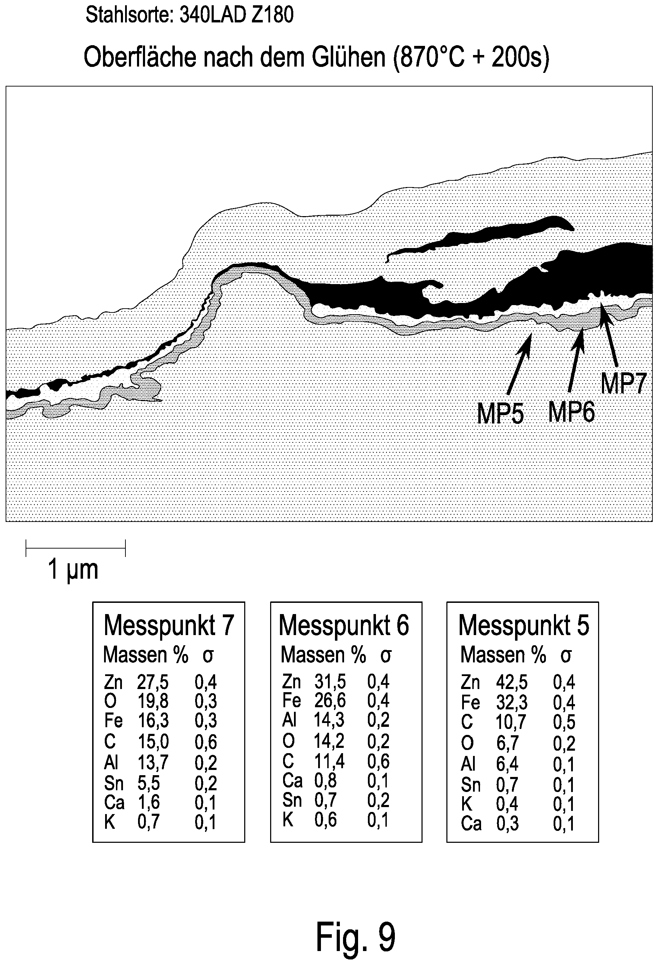

In Figur 9 erkennt man eine erfindungsgemäß ausgebildete und konditionierte Oberfläche in einer elektronenmikroskopischen Schnittansicht, wobei eine basische Lösung aus Kaliumstannat mit Kaliumhydroxid mit einem Rollcoater vor der Wärmebehandlung aufgebracht wurde. Hier wurde die Stahlgüte 340LAD mit einer Zinkauflage von 180 g/m² bei 870°C für 200 Sekunden geglüht. Die Schichten oberhalb des Messpunkt 7 (MP7) sind präparationsbedingte CSP-Redeposits und daher ohne Bedeutung. Man erkennt deutlich, dass die hellere Schicht in der Ebene des MP7 das Sn/Zn Oxid darstellt, dies wird auch durch die Bestandteile des MP7 belegt, welcher signifikant hohe Werte an Sn zeigen. Die Schicht ist sehr dünn und nahezu vollständig über der gesamten Bandoberfläche vorliegend. Darunter liegt eine dunklere Schicht aus Al-Oxid (MP6) welche ebenfalls über die gesamte Bandoberfläche vorliegt. Wiederum darunter liegt die reagierte Zn/Fe Schicht vor, welche teilweise leicht oxidierte Bereiche (bei MP4 allerdings nicht in Figur 9 dargestellt) aufweisen können.

An unterschiedlichen Messpunkten wurden Elementmessungen durchgeführt, welche die zuvor beschriebene Zinnbelegung zeigen.

Die Konzentration der Lösung, welche für die Konditionierung mittels Rollcoating eingesetzt wird, wird so gewählt, dass bei einem Nassfilm von 1 µm 50 - 60 mg Zinn/m² abgeschieden werden. Eine derart aufgebrachte Schicht bewirkt beim Glühen eine Modifikation der sich bildenden Oxidschicht, so dass eine mechanische Reinigung mittels Schleuderrad oder anderer mechanischer Verfahren nicht mehr notwendig ist.

Eine Lösung, welche nach der Erfindung eine Konditionierung bewirkt, besitzt eine Lösungskonzentration von 180 - 220 g/l K₂SnO₃*3H₂O.

Um die Basenkapazität zu erhöhen kann der Lösungsansatz mit 15 - 25 g/l KOH versetzt werden, so dass sich ein pH-Wert von ca. 13, d.h. 12,5 - 13,5 einstellt.

Da im praktischen Betrieb üblicherweise gerne saure Lösungen verwendet werden und Stannatlösungen beim Absäuern häufig dazu neigen, Niederschläge zu bilden, kann als Alternative zu KOH in geeigneter Weise das Zinn soweit komplexiert werden, dass man eine klare niederschlagsfreie Lösung erhält, indem Zitronensäure in einer Menge von 30 - 50 g/l zugegeben wird, was zu einem pH-Wert von etwa 4,8 führt.

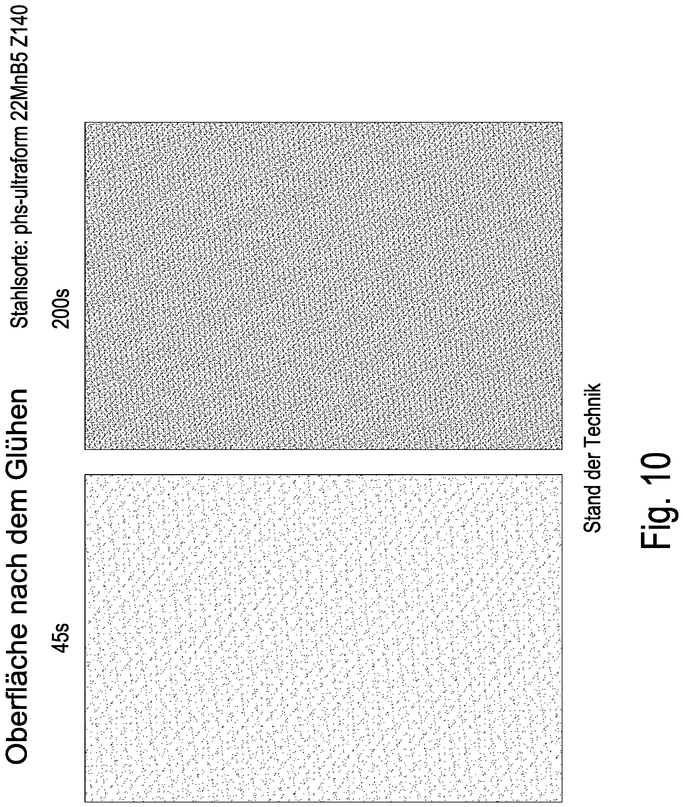

In Figur 10 erkennt man noch einmal die Oberfläche eines herkömmlichen, nicht erfindungsgemäß konditionierten Blechs für eine andere Stahlsorte (22MnB5 mit Zinkauflage Z140 - 140 g/m²) nach 45 Sekunden und 200 Sekunden Glühdauer bei 870°C. Beide Bleche zeigen die bereits erwähnte beige-grüne Farbe.

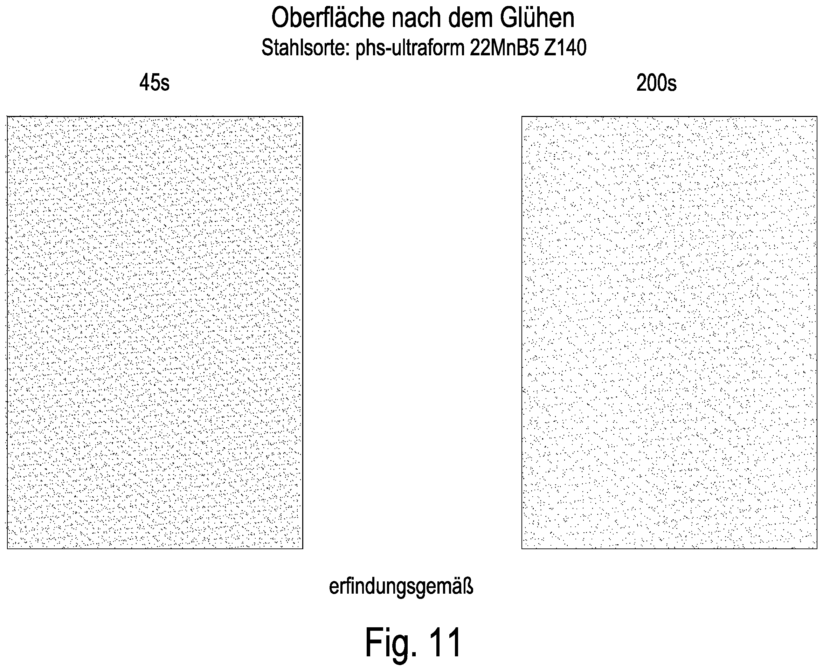

In Figur 11 erkennt man bei zwei Blechen (wieder 22MnB5 mit Zinkauflage Z140 - 140 g/m²), die erfindungsgemäß konditioniert wurden, die Oberflächen nach 45 Sekunden und 200 Sekunden Glühzeit bei 870°C (also über Ac3). Die Unterschiede in der Oberflächenfärbung sind deutlich sichtbar.

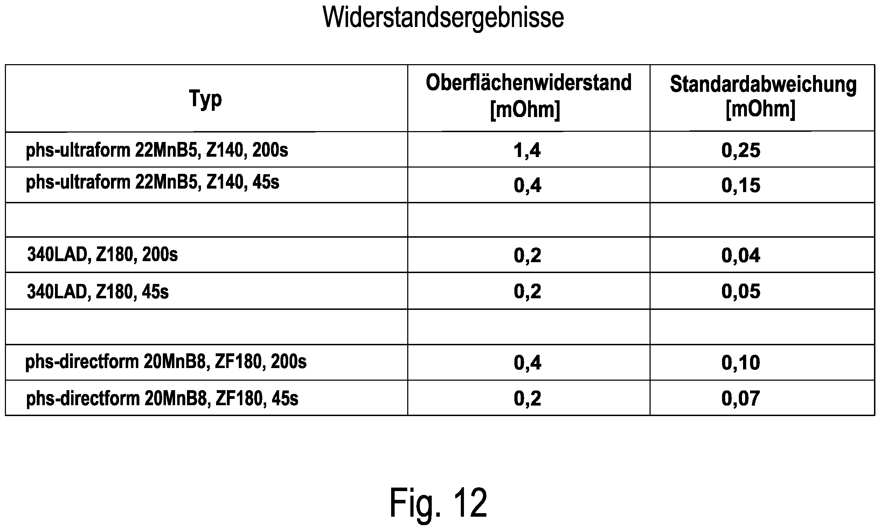

In Figur 12 erkennt man dazu die entsprechenden Widerstandsergebnisse für verschiedene Stahlgüten und Glühdauern jeweils bei 870°C, die zeigen, dass mit der erfindungsgemäßen Oberflächenkonditionierung ein sehr geringer Oberflächenwiderstand erreicht wird, der eine sehr gute Schweißbarkeit erwarten lässt. Die dritte Güte 20MnB8 wurde mit einer Zink-Eisenschicht, also einer sogenannten Galvannealed Schicht von 180 g/m² beschichtet.

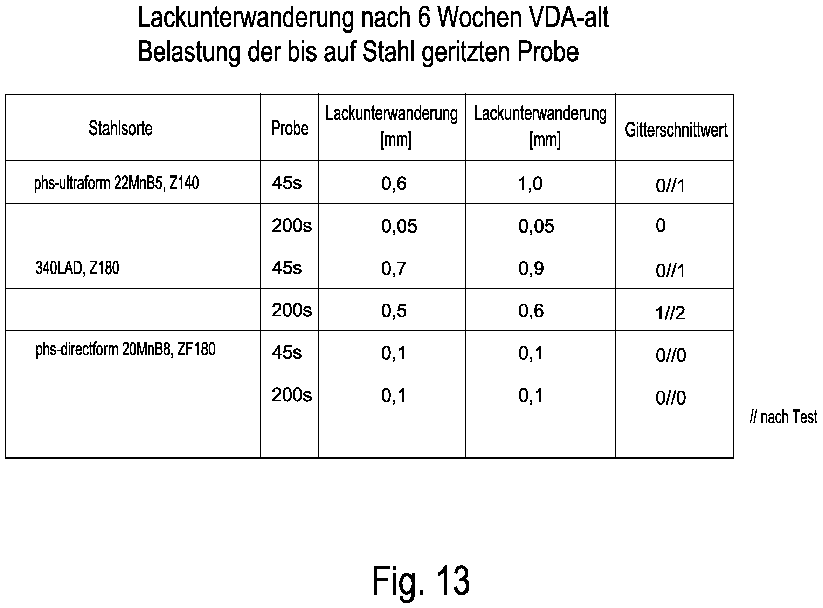

Auch bezüglich der Korrosion wird durch die erfindungsgemäße Oberflächenkonditionierung ein Vorteil bei der Lackunterwanderung erzielt, denn wie die Ergebnisse in Figur 13 zeigen, sind die Lackunterwanderungsergebnisse so gut, dass offensichtlich ein auf die Bleche ohne mechanische Abreinigung aufgebrachte kathodische Tauchlack nur sehr geringfügig und nicht in einem größeren Maße als bei anderen Blechen unterwandert wird. Hierzu wurde der VDA 233-102 Klimawechseltest durchgeführt und dabei die Lackunterwanderung in mm als auch der jeweilige Gitterschnittwert im Kreuzschnitt nach DIN EN ISO 16276-2 vor als auch nach der erwähnten Korrosionsprüfung nach VDA 233-102 ermittelt. Die Skala reicht hier von 0 (sehr gut) bis 5 (totale Enthaftung). Man erkennt dabei, dass zumeist der Wert vor als auch nach der Prüfung 0 also ausgezeichnet war. Teilweise sind kleine Bereiche abgeplatzt welche zu Werten von 1 und teilweise 2 führten.

Die erfindungsgemäße Konditionierung wurde insbesondere anhand der Stannate vorgestellt, im Wesentlichen gleich reagierend sind aber auch die Titanate, Oxalate und die Zirkonate. Es kann dementsprechend vermutet werden, dass diese in gleicher Weise wirksam sind, insbesondere die entsprechenden Zinnverbindungen.

In besonderer Weise scheint jedoch das Zinn wirksam zu sein, weshalb die Oberflächenkonditionierung auch dann gelingt, wenn das Zinn metallisch vorliegt. Die Abscheidung des Zinns auf der Oberfläche mit Hilfe der Stannate, d.h. in ionarer Form, hat jedoch den Vorteil, dass das Aufbringen in vergleichsweise einfacher Weise in einem Rollcoating- Verfahren oder Tauch-Quetsch-Verfahren erfolgen kann.

Selbstverständlich sind auch alle anderen Verfahren geeignet, mit denen flüssige ionare Lösungen auf eine Oberfläche appliziert werden können.

Die Abscheidung von metallischem Zinn ist gleichwohl denkbar und beispielsweise über CVD- oder PVD-Prozess möglich.

Die Aufbringung kann inline am Band erfolgen bevor dies zu einzelnen Platinen geschnitten wird. Darüber hinaus können auch die aus dem Band ausgeschnittenen Platinen entsprechend beschichtet werden.

Anschließend werden die Platinen auf eine Temperatur aufgeheizt, die eine Gefügeänderung hin zum Austenit bewirkt. Die austenitisierten Platinen werden dann anschließen einem Presshärtewerkzeug zugeführt, in dem die Platine mittels eines Ober- und Unterwerkzeuges in einem Hub oder mehreren Hüben umgeformt wird. Dies kann im oben erwähnten phs-directform oder phs-multiform Prozess mit mehreren Stanz- bzw. Beschnittoperationen als auch mit oder ohne Vorkühlung durchgeführt werden. Durch das Anliegen des Materials der umgeformten Platine an den insbesondere gekühlten Werkzeugen wird dem Stahlmaterial die Wärme so schnell entzogen, dass es zu einer martensitischen Härtung kommt.

Bei der Erfindung ist von Vorteil, dass es gelingt, die Oberfläche eines für das Formhärten oder Presshärten vorgesehenen Stahlblechs so zu konditionieren, dass eine mechanische Endreinigung zur Beseitigung von oxidischen Oberflächenschichten entfallen kann, so dass derartige Bleche in gleicher Weise, wie zum Beispiel feueraluminierte Bleche, verarbeitet werden können, jedoch mit dem Vorteil, dass gegenüber feueraluminierten Blechen eine hohe kathodische Korrosionsschutzwirkung erreicht wird.

## Patentansprüche

1. Verfahren zum Herstellen gehärteter Stahlbauteile, wobei aus einem legierungsverzinkten Band aus einer härtbaren Stahllegierung Platinen ausgeschnitten werden und anschließend die Platinen auf eine Temperatur aufgeheizt werden, die eine Gefügeänderung hin zum Austenit bewirkt bevorzugt auf eine Temperatur über dem jeweiligen Ac3-Punkt, wobei die austenitisierten Platinen anschließend einem Presshärtewerkzeug zugeführt werden, in dem die Platinen mittels eines Ober- und Unterwerkzeuges in einem Hub oder mehreren Hüben warmumgeformt werden, wobei die umgeformte Platine an den insbesondere gekühlten Werkzeugen mit einer Geschwindigkeit über der kritischen Abkühlrate gekühlt wird, so dass es zu einer martensitischen Härtung kommt, **dadurch gekennzeichnet, dass** nach dem Verzinken bevorzugt Feuerverzinken des Stahlbandes und vor der Temperaturerhöhung zum Zwecke der Austenitisierung Zinn auf die Oberfläche des Bandes oder der Platine aufgebracht wird.

2. Verfahren nach Anspruch 1,
**dadurch gekennzeichnet, dass**
das Zinn in ionarer Form oder in metallischer Form aufgebracht wird, wobei das Zinn in ionarer Form aus einer wässrigen Salzlösung und in metallischer Form mit einem CVD- oder PVD-Verfahren aufgebracht wird.

3. Verfahren nach Anspruch 2,
**dadurch gekennzeichnet, dass**
das Zinn aus einer alkalischen oder sauren Lösung aufgebracht wird.

4. Verfahren nach Anspruch 3,
**dadurch gekennzeichnet, dass**
eine wässrige Stannatlösung aufgebracht wird, die basisch oder sauer eingestellt ist.

5. Verfahren nach Anspruch 2,
**dadurch gekennzeichnet, dass**
das Zinn in der Lösung mit Zitronensäure komplexiert ist.

6. Verfahren nach Anspruch 2,
**dadurch gekennzeichnet, dass**
die wässrige Lösung mit einer Schichtdicke von 1 - 5 µm aufgebracht wird, insbesondere 1 - 3 µm aufgebracht wird, wobei die Schichtdicke getrocknet 50 - 250 nm, bevorzugt 50 -150 nm insbesondere 75 - 125 nm, insbesondere 80 - 100 nm beträgt.

7. Verfahren nach einem der vorhergehenden Ansprüche,
**dadurch gekennzeichnet, dass**
die Zinnbelegung 30 - 90 mg Zinn/m2 beträgt, insbesondere 40 - 80 mg Zinn/m² beträgt, und insbesondere 50 - 60 mg Zinn/m² beträgt.

8. Verfahren nach Anspruch 2,
**dadurch gekennzeichnet, dass**
eine wässrige Lösung mit einer Lösungskonzentration von 150 - 250 g/l K₂SnO₃*3H₂O verwendet wird.

9. Verfahren nach Anspruch 8,
**dadurch gekennzeichnet, dass**
ein wässriger Lösungsansatz mit 150 - 250 g/l K₂SnO₃*3H₂O und 15 - 25 g/l KOH verwendet wird.

10. Verfahren nach Anspruch 3,
**dadurch gekennzeichnet, dass** eine Lösung verwendet wird, die einen pH-Wert von 12,5 - 13,5 besitzt.

11. Verfahren nach Anspruch 3,
**dadurch gekennzeichnet, dass** eine Lösung verwendet wird, die einen pH-Wert von 4 - 5,5 besitzt und in der das Zinn mit Zitronensäure komplexiert ist.

12. Verfahren nach Anspruch 11,
**dadurch gekennzeichnet, dass**
zur Komplexierung des Zinns Zitronensäure in einer Menge von 35 - 40 g/l enthalten ist, wobei der pH-Wert 4 - 5,5 beträgt.

13. Verfahren nach Anspruch 9,
**dadurch gekennzeichnet, dass**
die Lösungskonzentration 200 g/l K₂SnO₃*3H₂O mit 20 g/l KOH beträgt.

## Claims

1. Method for producing hardened steel components, wherein plates are cut out from a galvanised strip made of a hardenable steel alloy and then the plates are heated to a temperature which causes a microstructural change to make it austenite, preferably at a temperature above the respective Ac3 point, wherein the austenitised plates are then conveyed to a press hardening tool in which the plates are hot-formed in a single stroke or multiple strokes by means of an upper and lower tool, wherein the formed plate is cooled using the in particular cooled tools at a speed above the critical cooling rate, with the result that this leads to a martensitic hardening, **characterised in that** tin is applied to the surface of the strip or plate after the steel strip is galvanised, preferably hot-galvanised, and before the temperature is increased for the purpose of austenitisation.

2. Method according to claim 1,
**characterised in that**
the tin is applied in ionic form or in metallic form, wherein the tin in ionic form is applied from an aqueous salt solution and in metallic form with a CVD or PVD method.

3. Method according to claim 2,
**characterised in that**
the tin is applied from an alkaline or acidic solution.

4. Method according to claim 3,
**characterised in that**
an aqueous stannate solution, which is alkaline or acidic, is applied.

5. Method according to claim 2,
**characterised in that**
the tin in the solution is complexed with citric acid.

6. Method according to claim 2,
**characterised in that**
the aqueous solution is applied with a layer thickness of 1-5 µm, in particular 1-3 µm, wherein the dry layer thickness is 50-250 nm, preferably 50-150 nm, in particular 75-125 nm, in particular 80-100 nm.

7. Method according to one of the preceding claims,
**characterised in that**
the tin coverage is 30-90 mg tin/m², in particular 40-80 mg tin/m², and in particular 50-60 mg tin/m².

8. Method according to claim 2,
**characterised in that**
an aqueous solution with a solution concentration of 150-250 g/l K₂SnO₃*3H₂O is used.

9. Method according to claim 8,
**characterised in that**
an aqueous solution batch with 150-250 g/l K₂SnO₃*3H₂O and 15-25 g/l KOH is used.

10. Method according to claim 3,
**characterised in that** a solution is used which has a pH of 12.5-13.5.

11. Method according to claim 3,
**characterised in that** a solution is used which has a pH of 4-5.5 and in which the tin is complexed with citric acid.

12. Method according to claim 11,
**characterised in that**
to complex the tin, citric acid is included in a quantity of 35-40 g/l, wherein the pH is 4-5.5.

13. Method according to claim 9,
**characterised in that**
the solution concentration is 200 g/l K₂SnO₃*3H₂O with 20 g/l KOH.

## Revendications

1. Procédé de fabrication de composants en acier durci, dans lequel des flans de tôle étant découpés à partir d'une bande galvanisée en alliage constituée d'un alliage d'acier durcissable et les flans de tôle étant ensuite chauffés à une température qui provoque une modification microstructurale en austénite, de préférence à une température supérieure au point Ac3 pertinent, les flans de tôle austénitisés étant ensuite introduits dans un outil de durcissement sous presse dans lequel les flans de tôle sont formés à chaud au moyen d'un outil supérieur et d'un outil inférieur en une course ou plusieurs courses, le flan de tôle façonné étant refroidi au niveau des outils, qui sont en particulier refroidis à une vitesse supérieure à la vitesse de refroidissement critique, ce qui a pour résultat un durcissement martensitique, **caractérisé en ce que** de l'étain est appliqué sur la surface de la bande ou du flan de tôle après galvanisation, de préférence une galvanisation par immersion à chaud, de la bande d'acier et avant que la température ne soit accrue pour provoquer une austénitisation.

2. Procédé selon la revendication 1,
**caractérisé en ce que**
l'étain est déposé sous forme ionique ou sous forme métallique, l'étain étant déposé sous forme ionique à partir d'une solution saline aqueuse et sous forme métallique par un procédé CVD ou PVD.

3. Procédé selon la revendication 2,
**caractérisé en ce que**
l'étain est appliqué à partir d'une solution alcaline ou acide.

4. Procédé selon la revendication 3,
**caractérisé en ce qu'**une
solution aqueuse de stannate est appliquée, qui est ajustée de manière basique ou acide.

5. Procédé selon la revendication 2,
**caractérisé en ce que**
l'étain dans la solution est complexé avec de l'acide citrique.

6. Procédé selon la revendication 2,
**caractérisé en ce que**
la solution aqueuse est appliquée avec une épaisseur de couche de 1 - 5 µm, en particulier de 1 - 3 µm, l'épaisseur de couche étant de 50 - 250 nm, de préférence de 50 -150 nm, en particulier de 75 - 125 nm, en particulier de 80 - 100 nm, une fois séchée.

7. Procédé selon l'une des revendications précédentes,
**caractérisé en ce que**
la charge d'étain est de 30 - 90 mg d'étain/m2, en particulier de 40 - 80 mg d'étain/m², et en particulier de 50 - 60 mg d'étain/m².

8. Procédé selon la revendication 2,
**caractérisé en ce qu'**une
solution aqueuse ayant une concentration de solution de 150 - 250 g/l de K₂SnO₃*3H₂O est utilisée.

9. Procédé selon la revendication 8,
**caractérisé en ce qu'**une
solution aqueuse contenant 150 à 250 g/l de K₂SnO₃*3H₂O et de 15 - 25 g/l KOH est utilisée.

10. Procédé selon la revendication 3,
**caractérisé en ce qu'**une solution ayant un pH de 12,5 à 13,5 est utilisée.

11. Procédé selon la revendication 3,
**caractérisé en ce qu'**une solution ayant un pH de 4 à 5,5 et dans laquelle l'étain est complexé avec de l'acide citrique est utilisée.

12. Procédé selon la revendication 11,
**caractérisé en ce que**,
pour complexer l'étain, de l'acide citrique est contenu en une quantité de 35 à 40 g/l, le pH étant de 4 à 5,5.

13. Procédé selon la revendication 9,
**caractérisé en ce que**
la concentration de la solution est de 200 g/l de K₂SnO₃*3H₂O avec 20 g/l de KOH.
